# EUROPEAN PATENT SPECIFICATION

(11) **EP 4 368 869 B1**
(45) Date of publication and mention of the grant of the patent: **02.04.2025**
(21) Application number: 23208738.7
(22) Date of filing: 09.11.2023
(51) Int. Cl.: F16L 47/03, F16L 25/10

(54) **WELDING CONNECTION SYSTEM FOR CONNECTING TUBULAR ELEMENTS**
SCHWEISSVERBINDUNGSSYSTEM ZUM VERBINDEN VON ROHRFÖRMIGEN ELEMENTEN
SYSTÈME DE RACCORDEMENT PAR SOUDAGE POUR RACCORDER DES ÉLÉMENTS TUBULAIRES

(30) Priority: 11.11.2022 IT 202200023340
(43) Date of publication of application: 15.05.2024
(73) Proprietor: Valsir S.p.A. A Socio Unico, 25078 Vestone (BS) (IT)
(72) Inventor: MARINI, Davide, 25078 VESTONE (BS) (IT); RIFICI, Sebastiano, 25078 VESTONE (BS) (IT); ZANCA, Nicola, 25078 VESTONE (BS) (IT)
(74) Representative: Studio Torta S.p.A.

(56) References cited:
- EP-A1- 0 493 316
- EP-A1- 3 698 948
- CH-A- 504 642

## Description

### CROSS-REFERENCE TO RELATED APPLICATIONS

This patent application claims priority from Italian patent application no. 102022000023340 filed on November 11, 2022.

### TECHNICAL FIELD

The present invention relates to a welding connection system for connecting tubular elements.

### BACKGROUND

Various systems are known for connecting tubular elements to one another.

In particular, push-fit systems are known, in which respective ends of tubular elements (pipes, couplings, etc.) are inserted into one another. In a conventional push-fit system, an end portion of a first tubular element (commonly called spigot) is push-fitted inside a corresponding end portion of a second tubular element (called socket), containing a gasket that ensures hydraulic seal. Besides being very simple to produce, this type of connection does not require reductions in section. However, push-fit connections do not guarantee high hydraulic seals, above all at high pressures, and slip-out can occur, for example when the system is subjected to overloads in the wastewater network or to external stress.

Alternatively, systems are known, in particular for HDPE pipes, where the connections are butt welded or welded with an electrowelding sleeve. Such systems are known from e.g. EP 3 698 948 A1.

However, electric sleeve systems (electrowelding sleeve) are susceptible to improvements, above all in terms of effectiveness and simple and quick assembly.

### SUMMARY

An object of the present invention is to provide a connection system for connecting tubular elements which is without the drawbacks of the prior art indicated herein.

In particular, it is an object of the invention to provide a connection system that is particularly effective and at the same time simple to use, also in applications, such as waste water discharge systems on ships or other similar applications, which have particularly strict requirements.

In accordance with these objects, the present invention relates to a connection system for connecting tubular elements as defined in essential terms in the appended claim 1 and, in its additional features, in the dependent claims.

In substance, the connection system of the present invention combines a push-fit joint by mechanical interference with a weld via an electrowelding sleeve, which surrounds the area of the tubular elements (pipes, couplings, etc.) joined by the push-fit joint.

In this way, the connection system of the invention can withstand high pressures, even above 5 bar (compared to values of around 0.5 bar typically obtainable with conventional push-fit systems).

On the other hand, with respect to known electrowelding sleeves, the system of the invention allows easier and more precise assembly, as welding takes place on the tubular elements already joined to one another by the push-fit joint.

### BRIEF DESCRIPTION OF THE FIGURES

Further features and advantages of the present invention will be apparent from the description below of a non-limiting example of embodiment thereof, with reference to the figures of the accompanying drawings, wherein:
- Fig. 1 is an exploded perspective view of a connection system in accordance with the invention;
- Fig. 2 is a longitudinal sectional view of the connection system of Fig. 1 assembled;
- Fig. 3 is a longitudinal sectional view of a detail of the connection system of Fig. 2, with parts removed for clarity;
- Fig. 4 is a view in enlarged scale of the part indicated with IV in Fig. 3.

### DESCRIPTION OF EMBODIMENTS

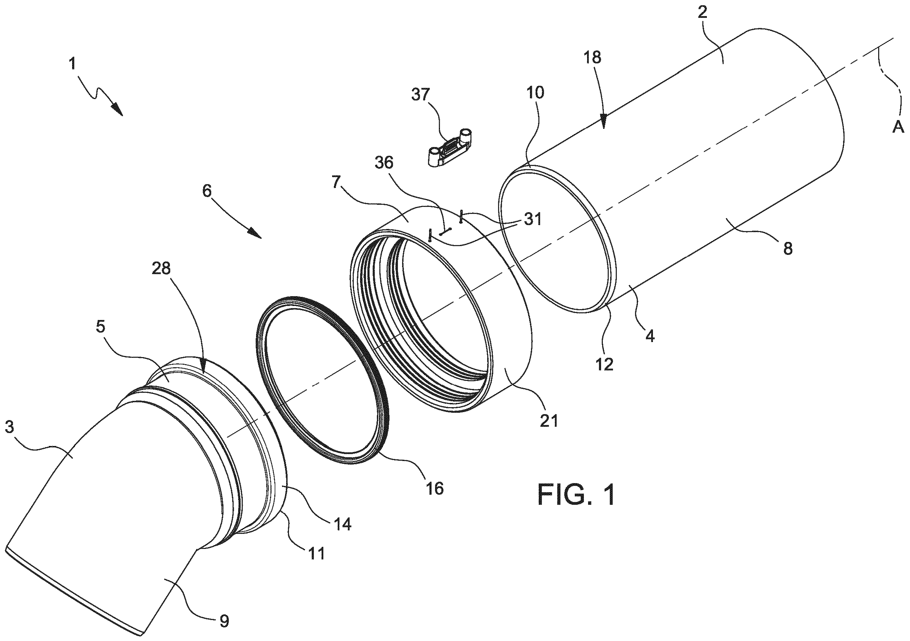

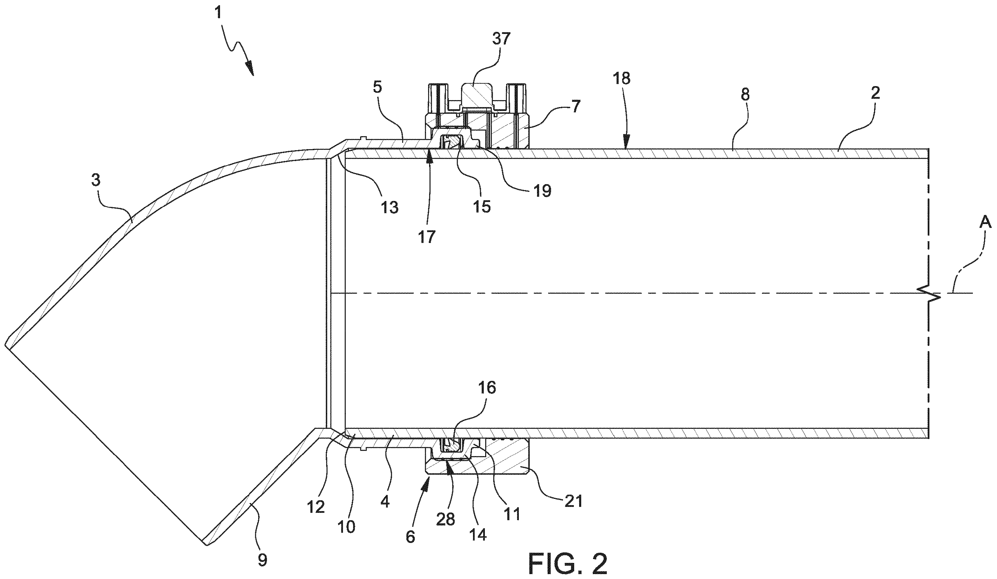

Figs. 1 and 2 indicate as a whole with 1 a connection system for connecting tubular elements, for example for discharge systems in the naval sector (i.e., networks of pipes for discharging water and other waste liquids on ships). Clearly, the connection system of the invention can be applied to other sectors.

The connection system 1 is a welding connection system and comprises a first tubular element 2 and a second tubular element 3, having respective end portions 4, 5 extending along a common axis A and insertable into each other along the axis A to provide a push-fit joint 6, and an electrowelding sleeve 7 positioned radially outside the end portions 4, 5 inserted one into the other.

The tubular elements 2, 3 can be of various types and have various shapes and sizes: pipes, couplings, etc. Preferably, but not necessarily, the tubular elements 2, 3 have a circular section.

The tubular elements 2 and 3 can be made of various polymer materials, such as polypropylene or polyethylene, and can also have a multi-layer structure (with an outer layer, in contact with the sleeve 7, made, for example, of polyethylene or polypropylene).

The sleeve 7 is made, for example, but not necessarily, of polypropylene.

The first tubular element 2 and the second tubular element 3 have respective main bodies 8, 9, which can be variously shaped; the end portions 4, 5 are positioned at respective longitudinal ends 10, 11 facing each other of the bodies 8, 9 of the tubular element 2 and of the tubular element 3.

The end portion 4 of the tubular element 2 is shaped and sized so as to be inserted inside the end portion 5 of the tubular element 3.

In the non-limiting example illustrated, the end portion 4 of the tubular element 2, for example cylindrical, has a cross section which is the same as the body 8 of the tubular element 2, i.e., there is no section narrowing or widening, neither internal nor external, between the end portion 4 and the rest of the tubular element 2.

The end portion 4 has a free front end edge 12, preferably tapered towards the end 10.

The end portion 5 of the tubular element 3 is enlarged radially outwards with respect to the body 9 of the tubular element 3 and consequently has an internal cross section and internal diameter greater than the rest of the tubular element 3. The end portion 5 is joined to the body 9 by an internal annular shoulder 13.

The end portion 5 of the tubular element 3 is shaped so as to receive the end portion 4 of the tubular element 2; when the end portion 4 of the tubular element 2 is inserted inside the end portion 5 of the tubular element 3, abutting against the shoulder 13, there is no section narrowing inside the connection system 1.

The end portion 5 has a radially outer collar 14, which projects from an outer lateral surface of the end portion 5 close to the end 10 and is internally provided with an annular seat 15 housing a sealing ring 16; the sealing ring 16 is shaped so that, in undeformed conditions (shown in Fig. 2), it projects radially from the seat 15 beyond an inner lateral surface 17 of the end portion 5 and contacts an outer lateral surface 18 of the end portion 4 of the tubular element 2 when the end portion 4 is inserted into the end portion 5. The collar 14 ends with an end edge 19.

The push-fit joint 6 is defined by the mechanical interference between the surfaces 17, 18 with interposition of the sealing ring 16.

The mechanical interference defining the push-fit joint 6 can be guaranteed solely by the sealing ring 6 projecting beyond the surface 17 to contact the surface 18 (the end portion 4 of the tubular element 2 being inserted inside the end portion 5 of the tubular element 3 with radial clearance), or also by the surfaces 17, 18 that are in direct contact with each other (the end portion 4 of the tubular element 2 being forced inside the end portion 5 of the tubular element 3 with radial interference).

The electrowelding sleeve 7 comprises an annular body 21 closed around the axis A and fitted around the end portions 4, 5 of the tubular elements 2, 3.

The sleeve 7 is positioned radially outside and around the end portions 4, 5.

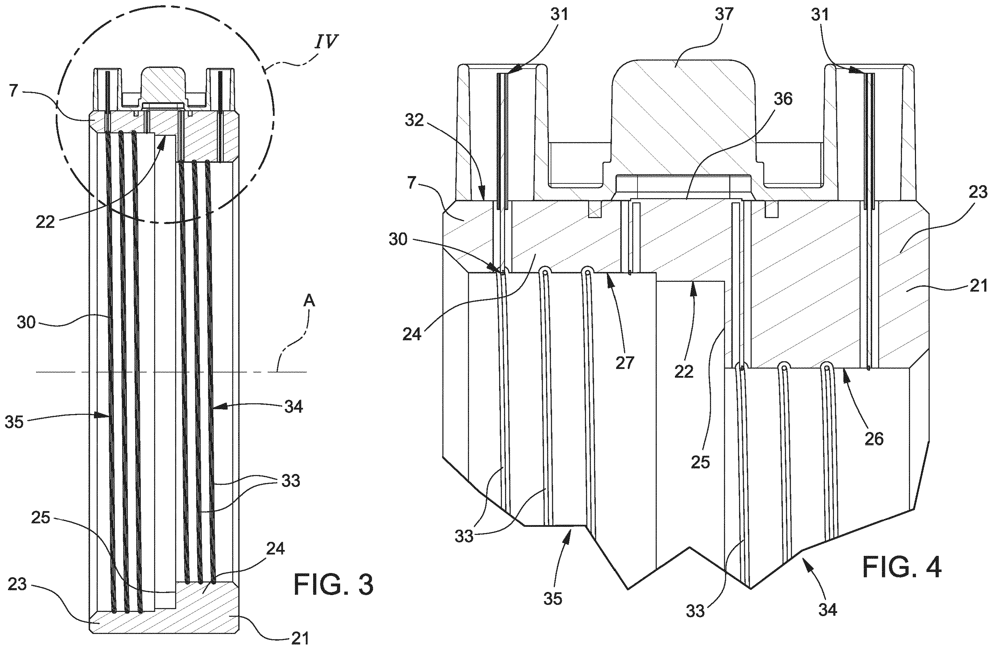

With reference also to Figs. 3 and 4, the sleeve 7 has a substantially L-shaped longitudinal section and has a cavity 22 shaped to house the collar 14. The sleeve 7 comprises two portions 23, 24 having different internal cross section, i.e., different internal diameter, joined to each other by an annular shoulder 25 to define the cavity 22 and having respective contact surfaces 26, 27 cooperating with the outer lateral surface 18 of the end portion 4 of the tubular element 2 and with an outer lateral surface 28 of the collar 14, respectively. The annular shoulder 25 defines an axial positioning abutment of the sleeve 7 with respect to the tubular elements 2, 3.

The sleeve 7 is provided with an electrical conductive filament 30 having two opposite ends connected to respective pins 31 that extend radially outward from an outer lateral surface 32 of the annular body 21, opposite the contact surfaces 26, 27; the filament 30 is wound in a plurality of coils 33 arranged on both the contact surfaces 26, 27 of the portions 23, 24. The filament 30 comprises in particular two groups 34, 35 of coils 33 connected to each other by a stretch of filament 36 and positioned on respective contact surfaces 26, 27. For example, each group 34, 35 comprises at least two or three coils, or even more. In this way, the sleeve 7 has two welding zones radially offset with respect to each other, arranged on the portions 23, 24 and in contact with the two tubular elements 2, 3 with different diameter.

The stretch of filament 36, which forms a bridge for connection between the two groups 34, 35 of coils 33, can be produced inside the annular body 21 of the sleeve 7 during manufacture of the sleeve 7, or can be added subsequently to the outside of the annular body 21.

The pins 31 are advantageously covered by a cap 37.

In use, the two tubular elements 2 and 3 are first joined by inserting the end portion 4 of the tubular element 2 inside the end portion 5 of the tubular element 3 along the axis A, until the end portion 4 abuts against the shoulder 13.

The sealing ring 16 remains radially interposed between the inner lateral surface 17 of the end portion 5 and the outer lateral surface 18 of the end portion 4 of the tubular element 2.

The sleeve 7 is mounted on the end portion 4 of the tubular element 2 and abuts axially against the end edge 19 of the collar 14 of the tubular element 3 through the annular shoulder 25, with the contact surfaces 26, 27 positioned around the outer lateral surface 18 of the end portion 4 of the tubular element 2 and of the outer lateral surface 28 of the collar 14, respectively.

The pins 31 are then connected to an electrical circuit: the current that passes through the filament 30 heats them, causing melting of the material of the contact surfaces 26, 27 of the portions 23, 24 of the sleeve 7 and of the surfaces 18, 28 in contact therewith, in this way creating the weld between the contact surfaces 26, 27 of the portions 23, 24 of the sleeve 7 and the surfaces 18, 28 of the tubular elements 2, 3.

Finally, it is understood that modifications and variations can be made to the connection system described and illustrated herein, without departing from the scope of the appended claims.

## Claims

1. A connection system (1) for connecting tubular elements comprising a first tubular element (2) and a second tubular element (3) having a first end portion (4) and a second end portion (5) respectively, extending along a common axis (A) and insertable into each other to provide a push-fit joint (6) defined by a mechanical interference between an outer lateral surface (18) of the first end portion (4) and an inner lateral surface (17) of the second end portion (5) with interposition of a radial sealing ring (16); and an electrowelding sleeve (7) positioned radially outside the end portions (4, 5) inserted one into the other; **characterized in that** the sleeve (7) has a substantially L-shaped longitudinal section and comprises two portions (23, 24) having different internal cross section and defining respective welding zones arranged radially offset with respect to each other.

2. A connection system according to claim 1, wherein said two portions (23, 24) of the sleeve (7) are joined to each other by an annular shoulder (25) and delimit a cavity (22) which houses a radially outer collar (14) of the second end portion (5); said two portions (23, 24) of the sleeve (7) having respective contact surfaces (26, 27) cooperating with the outer lateral surface (18) of the first end portion (4) and with an outer lateral surface (28) of the collar (14) respectively.

3. A connection system according to claim 2, wherein the sleeve (7) is provided with an electrical conductive filament (30) which is wound in a plurality of coils (33) arranged on both said contact surfaces (26, 27).

4. A connection system according to claim 2 or 3, wherein the collar (14) is internally provided with an annular seat (15) housing the sealing ring (16); and wherein the sealing ring (16) projects radially from the seat (14) beyond the inner lateral surface (17) of the second end portion (5) and contacts the outer lateral surface (18) of the first end portion (4).

5. A connection system according to one of the preceding claims, wherein the end portions (4, 5) project from respective main bodies (8, 9) of the tubular elements (2, 3); and wherein the first end portion (4) has a cross section which is the same as the cross section of the main body (8) of the first tubular element (2), i.e. there is no section narrowing or widening, neither internal nor external, between the first end portion (4) and the rest of the first tubular element (2); while the second end portion (5) is enlarged radially outwards with respect to the main body (9) of the second tubular element (3) and is joined thereto by an internal annular shoulder (13) and has an internal cross section and an internal diameter greater than the rest of the second tubular element (3).

## Patentansprüche

1. Verbindungssystem (1) zum Verbinden von rohrförmigen Elementen bzw. Rohrelementen, umfassend ein erstes rohrförmiges Element bzw. Rohrelement (2) und ein zweites rohrförmiges Element bzw. Rohrelement (3), die jeweils einen ersten Endabschnitt (4) und einen zweiten Endabschnitt (5) aufweisen, die sich entlang einer gemeinsamen Achse (A) erstrecken und ineinander steckbar sind, um eine Steckverbindung (6) bereitzustellen, die durch eine mechanische Interferenz bzw. Überlagerung zwischen einer äußeren lateralen Fläche bzw. Oberfläche (18) des ersten Endabschnitts (4) und einer inneren lateralen Fläche bzw. Oberfläche (17) des zweiten Endabschnitts (5) unter Zwischenanordnung eines radialen Dichtungsrings (16) definiert ist; und eine Elektroschweißmuffe (7), die radial außerhalb der ineinander gesteckten Endabschnitte (4, 5) positioniert ist; **dadurch gekennzeichnet, dass** die Muffe (7) einen im Wesentlichen L-förmigen Längsschnitt aufweist und zwei Abschnitte (23, 24) mit unterschiedlichem Innenquerschnitt umfasst, die jeweilige Schweißzonen definieren, die radial zueinander versetzt angeordnet sind.

2. Verbindungssystem nach Anspruch 1, wobei die beiden Abschnitte (23, 24) der Muffe (7) durch eine ringförmige Schulter (25) miteinander verbunden sind und einen Hohlraum (22) begrenzen, der einen radial äußeren Kragen (14) des zweiten Endabschnitts (5) unterbringt; wobei die beiden Abschnitte (23, 24) der Muffe (7) jeweilige Kontaktflächen bzw. -oberflächen (26, 27) aufweisen, die mit der äußeren lateralen Fläche (18) des ersten Endabschnitts (4) bzw. mit einer äußeren lateralen Fläche bzw. Oberfläche (28) des Kragens (14) zusammenwirken.

3. Verbindungssystem nach Anspruch 2, wobei die Muffe (7) mit einem elektrisch leitfähigen Filament (30) versehen ist, das in einer Mehrzahl von Spulen (33) gewickelt ist, die auf beiden der Kontaktflächen (26, 27) angeordnet sind.

4. Verbindungssystem nach Anspruch 2 oder 3, wobei der Kragen (14) innen mit einem ringförmigen Sitz (15) versehen ist, der den Dichtungsring (16) unterbringt bzw. aufnimmt; und wobei der Dichtungsring (16) radial von dem Sitz (14) über die innere laterale Fläche (17) des zweiten Endabschnitts (5) vorragt und die äußere laterale Fläche (18) des ersten Endabschnitts (4) kontaktiert bzw. berührt.

5. Verbindungssystem nach einem der vorhergehenden Ansprüche, wobei die Endabschnitte (4, 5) von jeweiligen Hauptkörpern (8, 9) der Rohrelemente (2, 3) vorragen; und wobei der erste Endabschnitt (4) einen Querschnitt aufweist, der der gleiche ist wie der Querschnitt des Hauptkörpers (8) des ersten Rohrelements (2), d. h. es gibt keine Abschnitts- bzw. Querschnittsverengung oder -erweiterung, weder intern noch extern, zwischen dem ersten Endabschnitt (4) und dem Rest des ersten Rohrelements (2); während der zweite Endabschnitt (5) radial nach außen in Bezug auf den Hauptkörper (9) des zweiten Rohrelements (3) vergrößert ist und mit diesem durch eine innere bzw. interne ringförmige Schulter (13) verbunden ist und einen Innenquerschnitt und einen Innendurchmesser aufweist, der größer ist als der Rest des zweiten Rohrelements (3).

## Revendications

1. Système de raccordement (1) pour raccorder des éléments tubulaires comprenant un premier élément tubulaire (2) et un second élément tubulaire (3) comportant, respectivement, une première partie d'extrémité (4) et une seconde partie d'extrémité (5), s'étendant le long d'un axe commun (A) et pouvant être insérées l'une dans l'autre pour fournir un joint à ajustage correct (6) défini par une interférence mécanique entre une surface latérale extérieure (18) de la première partie d'extrémité (4) et une surface latérale intérieure (17) de la seconde partie d'extrémité (5) avec interposition d'une bague d'étanchéité radiale (16) ; et un manchon (7) soudé électriquement positionné radialement à l'extérieur des parties terminales (4, 5) insérées l'une dans l'autre ; **caractérisé en ce que** le manchon (7) présente une section longitudinale sensiblement en forme de « L » et comprend deux parties (23, 24) présentant une section transversale interne différente et définissant des zones de soudage respectives disposées radialement de manière décalée l'une par rapport à l'autre.

2. Système de raccordement selon la revendication 1, lesdites deux parties (23, 24) du manchon (7) étant reliées l'une à l'autre par un épaulement annulaire (25) et délimitant une cavité (22) qui loge un collier radialement extérieur (14) de la seconde partie d'extrémité (5) ; lesdites deux parties (23, 24) du manchon (7) présentant des surfaces de contact (26, 27) respectives coopérant, respectivement, avec la surface latérale extérieure (18) de la première partie d'extrémité (4) et avec une surface latérale extérieure (28) du collier (14).

3. Système de raccordement selon la revendication 2, le manchon (7) étant pourvu d'un filament conducteur électrique (30) qui est enroulé dans une pluralité de bobines (33) disposées sur lesdites deux surfaces de contact (26, 27).

4. Système de raccordement selon la revendication 2 ou 3, le collier (14) étant pourvu intérieurement d'un siège annulaire (15) logeant la bague d'étanchéité (16) ; et la bague d'étanchéité (16) faisant saillie radialement à partir du siège (14) au-delà de la surface latérale intérieure (17) de la seconde partie d'extrémité (5) et entrant en contact avec la surface latérale extérieure (18) de la première partie d'extrémité (4).

5. Système de raccordement selon l'une des revendications précédentes, les parties d'extrémité (4, 5) faisant saillie à partir des corps principaux (8, 9) respectifs des éléments tubulaires (2, 3) ; et la première partie d'extrémité (4) présentant une section transversale qui est la même que la section transversale du corps principal (8) du premier élément tubulaire (2), c'est-à-dire qu'il n'y a pas de rétrécissement ou d'élargissement de section, ni interne ni externe, entre la première partie d'extrémité (4) et le reste du premier élément tubulaire (2) ; tandis que la seconde partie d'extrémité (5) est élargie radialement vers l'extérieur par rapport au corps principal (9) du second élément tubulaire (3) et est reliée à celui-ci par un épaulement annulaire interne (13) et présente une section transversale interne et un diamètre interne supérieurs au reste du second élément tubulaire (3).
